**Europäisches Patentamt**

**European Patent Office**

**Office européen des brevets**

(19)

(11) Veröffentlichungsnummer: **0 408 616 B1**

(12) **EUROPÄISCHE PATENTSCHRIFT**

(45) Veröffentlichungstag der Patentschrift:
18.09.91 Patentblatt 91/38

(51) Int. Cl.$^5$: **F16H 47/04**

(21) Anmeldenummer: **89903721.2**

(22) Anmeldetag: **31.03.89**

(86) Internationale Anmeldenummer:
**PCT/EP89/00348**

(87) Internationale Veröffentlichungsnummer:
**WO 89/09899 19.10.89 Gazette 89/25**

(54) HYDROSTATISCH MECHANISCHES LEISTUNGSVERZWEIGUNGSGETRIEBE.

(30) Priorität: **06.04.88 DE 3811508**

(43) Veröffentlichungstag der Anmeldung:
**23.01.91 Patentblatt 91/04**

(45) Bekanntmachung des Hinweises auf die
Patenterteilung:
**18.09.91 Patentblatt 91/38**

(84) Benannte Vertragsstaaten:
**AT DE FR IT**

(56) Entgegenhaltungen:
**EP-A- 3 397**
**DE-C- 3 342 047**

(73) Patentinhaber: **ZAHNRADFABRIK
FRIEDRICHSHAFEN AKTIENGESELLSCHAFT
Löwentaler Strasse 100 Postfach 2520
W-7990 Friedrichshafen 1 (DE)**

(72) Erfinder: **TENBERGE, Peter
Nelkenweg 8
W-7990 Friedrichshafen (DE)**
Erfinder: **ARAIN, Abdul
Unteres Bergfeld 26
W-8391 Thyrnau 2 (DE)**

EP 0 408 616 B1

## Beschreibung

Die Erfindung betrifft ein hydrostatisch-mechanisches Leistungsverzweigungsgetriebe, dessen mechanischer sowie hydrostatischer Leistungszweig eingangsseitig über eine gemeinsame Antriebswelle angetrieben und ausgangsseitig in einem ersten, vierwelligen Koppelgetriebe summiert werden. Zwei ausgangsseitige Koppelwellen dieses Koppelgetriebes sind wechselweise über ein dreiwelliges Planetennachschaltgetriebe mit einer Ausgangswelle des Leistungsverzweigungsgetriebes kuppelbar. Die erste Koppelwelle ist aus dem mit einem Planetenradträger und die zweite Koppelwelle ist mit einem Sonnenrad eines dreiwelligen, zweiten Koppelgetriebes triebmäßig verbunden. Ein Hohlrad des zweiten Koppelgetriebes ist über eine dritte Koppelwelle und über das Planetennachschaltgetriebe mit der Ausgangswelle gekoppelt.

Aus der EP-A 0003397 ist ein Lastschaltgetriebe bekanntgeworden, das die vorstehend wiedergegebenen Merkmale aufweist. Ein derartiges hydrostatisch-mechanisches Leistungsverzweigungsgetriebe weist eine feine Unterteilung der Übersetzung auf, was auf die Kombinationsmöglichkeiten der Planetenradsätze und Kupplungen zurückzuführen ist. Dadurch läßt sich eine gute Anpassung von Antriebs- und Arbeitsmaschine bei günstigen Wirkungsgraden erreichen. Bei dem vorbekannten Getriebe ist nachteilig, daß dessen konstruktiver Aufbau zu einer Baueinheit führt, die eine relativ große axiale Erstreckung aufweist. Eine Kupplung zwischen dem Hohlrad des zweiten Koppelgetriebes und der Ausgangswelle ist nicht vorhanden. Die Kupplungen sind zudem im Getriebe so angeordnet, daß eine zentrale Versorgung mit steuerdruck- und Schmiermedium nur umständlich möglich ist.

Der vorliegenden Erfindung liegt die Aufgabe zugrunde, ein hydrostatisch-mechanisches Leistungsverzweigungsgetriebe der eingangs genannten Art so zu verbessern, daß eine konstruktiv klar gegliederte und gut zugängliche Verbindung zwischen dem zweiten Koppelgetriebe und dem Planetennachschaltgetriebe gegeben ist.

Die der Erfindung zugrunde liegende Aufgabe wird dadurch gelöst, daß zwischen dem zweiten Koppelgetriebe und dem Planetennachschaltgetriebe vier Kupplungen angeordnet sind, durch deren erste Kupplung die dritte Koppelwelle mit dem Sonnenrad des Planetennachschaltgetriebes und durch deren zweite Kupplung die zweite Koppelwelle mit dem Sonnenrad und durch deren dritte Kupplung die erste Koppelwelle mit dem Planetenradträger des Planetennachschaltgetriebes und durch deren zweite und vierte die zweite Koppelwelle mit dem Planetenradträger des Planetenradnachschaltgetriebes verbindbar sind. Die erfindungsgemäße Ausgestaltung der Verbindung des zweiten Koppelgetriebes mit dem Planetennachschaltgetriebe führt zu einer besonders montagefreundlichen Baueinheit für insgesamt vier Kupplungen. Diese Kupplungen sind jeweils paarweise zusammengefaßt und so hintereinanderliegend angeordnet, daß sie zentral mit Steuerdruck- und schmiermedium versorgt werden können.

Eine besonders günstige Drehzahl und Drehmomentübertragung vom ersten vierwelligen Koppelgetriebe zum zweiten dreiwelligen Koppelgetriebe ist bei einer weiteren Ausgestaltung dem Gegenstands der Erfindung dadurch gegeben, daß die erste Koppelwelle ein Hohlrad eines ersten Planetenradsatzes und ein Planetenradträger eines zweiten Planetenradsatzes des ersten Koppelgetriebes rind die zweite Koppelwelle ein Sonnenrad des ersten Koppelgetriebes sind.

Es ist vorteilhaft, einen Umkehrplanetenradsatz vorzusehen, dessen Planetenradträger ständig mit der Ausgangswelle und dessen Sonnenrad mit dem Hohlrad des Nachschaltgetriebes verbunden ist, wobei ferner das Hohlrad des Umkehrplanetenradsatzes über eine zweite Bremse mit dem Gehäuse verbindbar ist. Die für den Reversierbetrieb erforderlichen Bauteile sind somit ebenfalls konstruktiv klar gegliedert aufgebaut und für Wartungsarbeiten ebenfalls leicht zugänglich angeordnet.

Um die Betriebssicherheit für die Betätigungselemente des Nachschaltgetriebes zu erhöhen, ist es vorteilhaft, daß die Bremsen durch Federkraft geschlossen sind und durch eine Hilfskraft geöffnet werden.

Um das Fahrzeug schleppen zu können, ist in der Abtriebswelle eine Trennkupplung angeordnet. Die Trennkupplung ermöglicht ein Abkoppeln des Hinterachsdifferentials vom Getriebe.

Nach einem weiteren vorteilhaften Merkmal ist ein Notbetrieb des Getriebes bei Ausfall der Getriebesteuerung in der Weise möglich, daß über die erste Kupplung und die Bremse, die durch Federkraft eingerückt sind, das Getriebe in einer Gangstufe weiter betrieben werden kann.

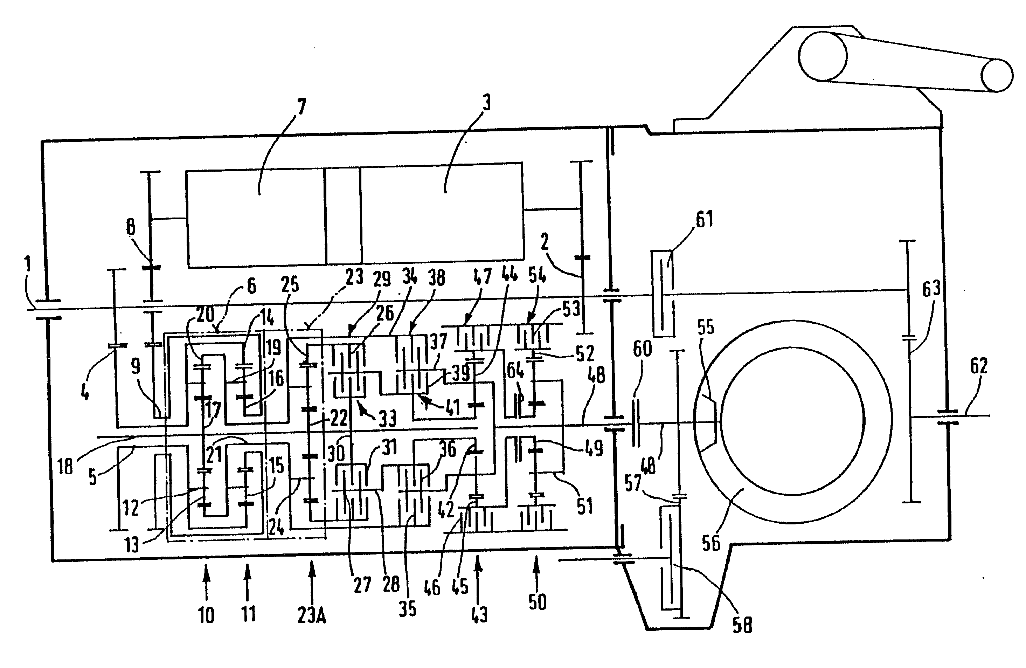

Die einzige Fig. zeigt ein erfindungsgemäßes hydrostatisch-mechanisches Leistungsverzweigungsgetriebe für einen landwirtschaftlichen Schlepper.

Eine Antriebswelle 1 treibt über ein Vorgelege 2 eine verstellbare Hydrostateinheit 3 und über ein Vorgelege 4 eine Eingangswelle 5 eines vierwelligen Koppelgetriebes 6 an. Die verstellbare Hydrostateinheit 3 wirkt mit einer Hydrokonstanteinheit 7 zusammen. Die Hydrokonstanteinheit 7 treibt über ein Vorgelege 8 eine zweite Eingangswelle 9 des Koppelgetriebes 6 an. Das Koppelgetriebe 6 enthält zwei dreiwellige Planetenradsätze 10 und 11. Die Eingangswelle 5 ist mit einem Planetenträger 12 des Planetenradsatzes 10 verbunden. Der Planetenradsatz 10 enthält Planeten 13. Die Eingangswelle 5 ist fest mit einem Hohlrad 14 des zweiten Planetenradsatzes 11 verbunden. Der Planetenradsatz 11 enthält Planeten 15. Die Eingangswelle 9 ist fest mit einen Sonnenrad 16 des zweiten Planetenradsatzes 11 verbunden. Eine Sonne 17 des ersten Planetenradsatzes 10 ist befestigt auf einer Koppelwelle 18. Ein Planetenradträger 19 des zweiten Planetenradsatzes 11 ist mit einem Hohlrad 20 des Planetenradsatzes 10 und einer Koppelwelle 21 verbunden. Die Koppelwellen 18 und 21 sind mit einem zweiten Koppelgetriebe 23 verbunden, das einen Planetenradsatz 23A aufweist. Eine Sonne 22 dieses Planetenradsatzes 23A ist mit der Sonne 17 des ersten Planetenradsatzes 10 und der Planetenradträger 19 des zweiten Planetenradsatzes 11 ist mit einem Planetenradträger 24 des Planetenradsatzes 23A über die Koppelwelle 21 verbunden.

An einem Hohlrad 25 des Planetenradsatzes 23A sind Außenlamellen 26 einer Kupplung 29 drehfest angebracht. Diese Außenlamellen 26 greifen zwischen Innenlamellen 27, die auf einer Welle 28 drehfest sind.

Auf der Koppelwelle 18 ist ein Kupplungsträger 30 montiert, der über drehfeste Außenlamellen 31 zwischen die auf der Welle 28 drehfest montierten Innenlamellen 27 einer Kupplung 33 eingreift.

An einer mit der Koppelwelle 21 fest verbundenen Zwischenwelle 34 sind Außenlamellen 35 einer Kupplung 38 drehfest montiert. Diese greifen zwischen Innenlamellen 36, die auf einer Welle 37 drehfest angebracht sind.

Die Welle 28 enthält drehfest Außenlamellen 39, die zwischen Innenlamellen 36 einer Kupplung 41 greifen.

Die Welle 28 ist fest mit einer Sonne 42 eines Planetenradsatzes 48 verbunden. Die Welle 37 trägt Planeten 44 des Planetenradsatzes 43. Ein Hohlrad 45 des Planetenradsatzes 48 ist über Lamellen 46 einer Bremse 47 mit einem Getriebegehäuse verbindbar. Die Welle 37 ist fest mit einer Getriebeausgangswelle 48 verbunden. Das Hohlrad 45 des Planetenradsatzes 43 ist fest mit einer Sonne 49 eines Planetenradsatzes 50 verbunden. Ein Planetenradträger 51 des Planetenradsatzes 50 ist fest mit der Getriebeausgangswelle 48 verbunden. Ein Hohlrad 52 des Planetenradsatzes 50 kann über Lamellen 58 einer Bremse 54 mit dem Getriebegehäuse verbunden werden.

Die Getriebeausgangswelle 48 ist mit einem Ritzel 55 versehen, das z.B. ein Tellerrad 56 einer Hinterachse (nicht dargestellt) des Fahrzeugs antreiben kann. Über ein Vorgelege 57 und eine Trennkupplung 58 kann eine zu einer weiteren (nicht dargestellten) Achse führende Antriebswelle 59 angetrieben werden.

Innerhalb der Getriebeausgangswelle 48 ist eine Kupplung 60 angeordnet. Die Antriebswelle 1 kann über eine Zapfenwellenkupplung 61 mit einer aus dem Getriebe herausgeführten Zapfenwelle 62 verbunden werden, die ein Vorgelege 63 aufweist. Weiterhin ist in der Verbindung zwischen dem Hohlrad 45 und dem Sonnenrad 49 eine Trennkupplung 64 angeordnet.

Funktionsweise : Über die Antriebswelle 1 werden die Hydrostateinheit 3 und die Eingangswelle 5 proportional zur Drehzahl einer Kraftmaschine angetrieben. Durch Verstellen des Fördervolumens der Hydrostateinheit 3 wird die Konstanteinheit 7 beschleunigt und das Hohlrad 25 des Planetenradsatzes 23A durch Summieren der Drehzahlen der Eingangswellen 5, 9 in den Koppelgetrieben 6 und 23 auf Drehzahl 0 gebracht. Ist die Drehzahl 0 des Hohlrads 25 erreicht, schließt die Kupplung 29. Die Summe der Leistungen aus dem hydrostatischen und dem mechanischen Zweig 9, 5 fließt über das Sonnenrad 17, den Planetenradträger 19, die Koppelwellen 18, 21 und das Hohlrad 25 des Planetenradsatzes 23A, die Kupplung 29 und die Sonne 42 in den vierten Planetenradsatz 43. Die Bremse 47 ist geschlossen, und das Hohlrad 45 steht somit still. Die Leistung fließt über den Planetenradträger 37 in die Abtriebswelle 48.

Die weitere Wandlung des Übersetzungsverhältnisses des Leistungsverzweigungsgetriebes wird durch ein weiteres Verstellen der Hydrostateinheit 3 erreicht. Hat nach Durchlaufen des ersten Fahrbereichs das Hohlrad 25 Synchrondrehzahl mit der Drehzahl des Kupplungsträgers 30 erreicht, schließt die Kupplung 33, und die Kupplung 29 öffnet sich. Sodann fließt die summierte Leistung aus mechanischem und hydrostatischen Zweig 5, 9 über das Sonnenrad 17 des ersten Planetenradsatzes 10, die Koppelwelle 18 und die geschlossene Kupplung 33. Der weitere Leistungsfluß in diesem zweiten Fahrbereich erfolgt über die Sonne 42 und bei geschlossener Bremse 47 und somit feststehendem Hohlrad 45 über den Planetenradträger 37 zur Getriebeausgangswelle 48.

Um in den dritten Fahrbereich zu schalten, wird bei Synchrondrehzahl der Kupplung 33 und des Hohlrads 34 die Kupplung 38 geschlossen und sodann unmittelbar die Kupplung 33 geöffnet. Die kombinierte Leistung aus mechanischem und hydrostatischen Leistungszweig 5, 9 fließt sodann über die Koppelwelle 21 und das Hohlrad 34 über die Kupplung 38 in den Planetenradträger 37, und bei geöffneten Bremse 47, 51 in die Getriebeausgangswelle 48.

Der vierte Fahrbereich wird erreicht durch Schließen der Kupplungen 33 und 41 bei Synchrondrehzahl mit Kupplung 33 und unmittelbar darauf folgend das Öffnen der Kupplung 38. Die summierte Leistung aus mechanischem und hydrostatischen Leistungszweig fließt sodann über die Sonne 17 des ersten Planetenradsatzes 10 über die Kupplung 33 und die Kupplung 41, und bei geöffneten Bremsen 47, 51 über den Planetenradträger 37 in die Getriebeausgangswelle 48.

Eine Umkehrung der Drehrichtung der Getriebeausgangswelle 48 erfolgt durch Schließen der Bremse 54 und damit Festhalten des Hohlrades 52 des Planetenradsatzes 50.

Ein erster Fahrbereich in diese Gegendrehrichtung ergibt sich aus der Summierung der hydrostatischen und mechanischen Leistung 9, 5 in der Sonnenwelle 17 des ersten Planetenradsatzes 10 und des Planetenradträgers 19 des zweiten Planetenradsatzes 11. Die Leistung fließt sodann über das Hohlrad 25 des Planetenradsatzes 23A bei geschlossener Kupplung 29 über die Sonne 42 in den Planetenradsatz 43. Bei offener Bremse 47 fließt die Leistung über das Hohlrad 45 zur Sonne 49 des Planetenradsatzes 50 und über den Planetenradträger 51 in die Getriebeausgangswelle 48. Ein Teil dieser Leistung fließt zum Steg des Planetenradsatzes 43 zurück und wird der dortigen Antriebsnennleistung überlagert.

Ein zweiter Fahrbereich in dieser Gegendrehrichtung der Getriebeausgangswelle 48 wird erreicht durch Schließen der Kupplung 33 und unmittelbar anschließendes Öffnen der Kupplung 29. Die summierte Leistung aus mechanischem und hydrostatischem Leistungszweig fließt sodann über die Sonne 17 des ersten Planetenradsatzes 10 über die Kupplung 33, die Sonne 42, das Hohlrad 45 und bei geschlossener Bremse 54 über den Planetenradträger 51 des Planetenradsatzes 50 zur Getriebeausgangswelle 48.

Bei einem Ausfall der Getriebesteuerung kann das Leistungsverzweigungsgetriebe in einer Gangstufe weiterbetrieben werden. Die Bremsen 47 und 54 sowie die Kupplung 29 sind durch Federkraft geschlossen, wobei mittels der Trennkupplung 64 der als Umkehrstufe dienende Planetenradsatz 50 abgetrennt wird. Ein Abschleppen des mit dem Leistungsverzweigungsgetriebe ausgerüsteten Fahrzeugs ist nach eine Öffnen der Trennkupplung 60 möglich.

**Patentansprüche**

1. Hydrostatisch-mechanisches Leistungsverzweigungsgetriebe, dessen mechanischer sowie hydrostatischer Leistungszweig eingangsseitig über eine gemeinsame Antriebswelle (1) angetrieben und ausgangsseitig in einem ersten, vierwelligen Koppelgetriebe (6) summiert werden, wobei zwei ausgangsseitige Koppelwellen (18, 21) dieses Koppelgetriebes (6) wechselweise über ein dreiwelliges Planetennachschaltgetriebe (43, 50) mit einer Ausgangswelle (48) des Leistungsverzweigungsgetriebes kuppelbar sind, wobei die erste Koppelwelle (21) außerdem mit einem Planetenradträger (24) und die zweite Koppelwelle (18) mit einem Sonnenrad (22) eines dreiwelligen, zweiten Koppelgetriebes (23) triebmäßig verbunden sind, dessen Hohlrad (25) über eine dritte Koppelwelle (28) und über das Planetennachschaltgetriebe mit der Ausgangswelle (48) gekoppelt ist, **dadurch gekennzeichnet**, daß zwischen dem zweiten Koppelgetriebe (23) und dem Planetennachschaltgetriebe (43, 50) vier Kupplungen (29, 33, 38, 41) angeordnet sind, durch deren erste Kupplung (29) die dritte Koppelwelle (28) mit dem Sonnenrad (42) des Planetennachschaltgetriebes (43) und durch deren zweite Kupplung (33) die zweite Koppelwelle (18) mit dem Sonnenrad (42) und durch deren dritte Kupplung (38) die erste Koppelwelle (21) mit dem Planetenträger (37) des Planetennachschaltgetriebes (43) und durch deren zweite und vierte (33, 41) die zweite Koppelwelle (18) mit dem Planetenradträger (37) des Planetenradnachschaltgetriebes (43) verbindbar sind.

2. Leistungsverzweigungsgetriebe nach Anspruch 1, **dadurch gekennzeichnet**, daß die erste Koppelwelle (21) ein Hohlrad (20) eines ersten Planetenradsatzes (10) und ein Planetenradträger (19) eines zweiten Planetenradsatzes (11) des ersten Koppelgetriebes (6) und die zweite Koppelwelle (18) ein Sonnenrad (17) des ersten Koppelgetriebes (6) sind.

3. Leistungsverzweigungsgetriebe nach den Ansprüchen 1 und 2, **dadurch gekennzeichnet**, daß ein Umkehrplanetenradsatz (50) vorgesehen ist, dessen Planetenradträger (51) ständig mit der Ausgangswelle (48) und dessen Sonnenrad (49) mit dem Hohlrad (45) des Nachschaltgetriebes (43) verbunden ist und ferner das Hohlrad (52) des Umkehrplanetenradsatzes (50) über eine zweite Bremse (54) mit dem Gehäuse verbindbar ist.

4. Leistungsverzweigungsgetriebe nach Anspruch 3, **dadurch gekennzeichnet**, daß die Bremsen (47 und 54) durch Federkraft geschlossen sind und durch eine Hilfskraft geöffnet werden.

5. Leistungsverzweigungsgetriebe nach Anspruch 1, **dadurch gekennzeichnet**, daß in der Abtriebswelle (28) eine Trennkupplung angeordnet ist.

6. Leistungsverzweigungsgetriebe nach Anspruch 4, **dadurch gekennzeichnet**, daß die erste Kupplung (29) durch Federkraft geschlossen ist und durch Hilfskraft geöffnet wird und daß in der Verbindung zwischen dem Hohlrad (45) des Nachschaltgetriebes (43) und dem Sonnenrad (49) des Umkehrsatzes (50) eine Trennkupplung angeordnet ist.

**Claims**

1. A hydromechanical power-split transmission, in which both the mechanical and the hydrostatic power-transmitting branches are driven at the input side by a common input shaft (1) and combined at the output side in a first, four-shaft coupling drive (6), two output-side coupling shafts (18, 21) of said coupling drive (6) being alternately connectable via a three-shaft downstream planetary drive (43, 50) with an output shaft (48) of the power-split transmission, the first coupling shaft (21) also being drivingly connected with a planet gear carrier (24) and the second coupling shaft (18) also being drivingly connected with a sun gear (22) of a three-shaft, second coupling drive (23), the ring gear (25) of which is coupled with the output shaft (48) via a third coupling shaft (28) and via the downstream planetary drive (43, 50), **characterised** in that between the second coupling drive (23) and the downstream planetary drive (43, 50) four clutches (29, 33, 38, 41) are arranged, by means of the first of which clutches (29) the third coupling shaft (28) is connectable with the sun gear (42) of the downstream planetary drive (43) and by means of the second of which clutches (33) the second coupling shaft (18) is connectable with the sun gear (42) and by means of the third of which clutches (38) the first coupling shaft (21) is connectable with the planet carrier (37) of the downstream planetary drive (43) and by means of the second and fourth of which clutches (33, 41) the second coupling shaft (18) is connectable with the planet gear carrier (37) of the downstream planetary gear drive (43).

2. A power-split transmission according to claim 1, **characterised** in that the first coupling shaft (21) is a ring gear (20) of a first planetary gear train (10) and is a planet gear carrier (19) of a second planetary gear train (11) of the first coupling drive (6) and in that the second coupling shaft (18) is a sun gear (17) of the first coupling drive (6).

3. A power-split transmission according to claims 1 and 2, **characterised** in that a reversing planetary gear train (50) is provided, the planet gear carrier (51) of which is permanently connected with the output shaft (48) and the sun gear (49) of which is permanently connected with the ring gear (45) of the downstream drive (43) and in that the ring gear (52) of the reversing planetary gear train (50) is connectable with the housing via a second brake (54).

4. A power-split transmission according to claim 3, **characterised** in that the brakes (47 and 54) are engaged by spring force and are released by auxiliary force.

5. A power-split transmission according to claim 1, **characterised** in that a separating clutch is arranged in the output shaft (28).

6. A power-split transmission according to claim 4, **characterised** in that the first clutch (29) is engaged by spring force and released by auxiliary force and that a clutch is arranged in the connection between the ring gear (45) of the downstream drive (43) and the sun gear (49) of the reversing gear train (50).

## Revendications

1. Transmission hydrostatique-mécanique à dérivation de puissance, dont la branche mécanique et la branche hydrostatique sont entraînées en entrée par un arbre moteur commun (1) et sont additionnées en sortie dans une première boîte de couplage (6) à quatre arbres, deux arbres de couplage (18, 21) de la sortie de cette boîte de couplage (6) pouvant être couplés alternativement à un arbre de sortie (48) de la transmission à dérivation de puissance au moyen d'une boîte de vitesses planétaire (43, 50) à trois arbres, le premier (21) et le second arbre de couplage (18) étant en outre en liaison motrice respectivement avec un porte-satellites (24) et un pignon planétaire (22) d'une seconde boîte de couplage (23) à trois arbres, dont la couronne à denture intérieure (25) est couplée à l'arbre de sortie (48) au moyen d'un troisième arbre de couplage (28) et de la boîte de vitesses planétaire, **caractérisée** en ce que quatre embrayages (29, 33, 38, 41) sont disposés entre la seconde boîte de couplage (21) et la boîte de vitesses planétaire (43, 50) et sont agencés de façon à pouvoir raccorder le troisième arbre de couplage (28) au pignon planétaire (42) de la boîte de vitesses planétaire (43) par le premier embrayage (29), le second arbre de couplage (18) audit pignon planétaire (42) par le deuxième embrayage (33), le premier arbre de couplage (21) au porte-satellites (37) de la boîte de vitesses planétaire (43) par le troisième embrayage (38), et le second arbre de couplage (18) au porte-satellites (37) de la boîte de vitesses planétaire (43) par le deuxième et le quatrième embrayage (31, 41).

2. Transmission selon la revendication 1, **caractérisée** en ce que le premier arbre de couplage (21) comprend une couronne à denture intérieure (20) d'un premier train planétaire (10) et un porte-satellites (19) d'un second train planétaire (11) de la première boîte de couplage (6), et le second arbre de couplage (18) comprend un pignon planétaire (17) de la première boîte de couplage (6).

3. Transmission selon les revendications 1 et 2, **caractérisée** en ce qu'il est prévu un train planétaire d'inversion (50) dans lequel le porte-satellites (51) est raccordé en permanence à l'arbre de sortie (48) et le pignon planétaire (49) est raccordé à la couronne (45) de la boîte de vitesses (43), et où, en outre, la couronne (52) du train planétaire d'inversion (50) peut être raccordée au carter au moyen d'un second frein (54).

4. Transmission selon la revendication 3, **caractérisée** en ce que les freins (47 et 54) sont fermés au moyen de la force de ressorts et sont ouverts au moyen d'une force auxiliaire.

5. Transmission selon la revendication 1, **caractérisée** en ce qu'un embrayage de séparation est disposé sur l'arbre de sortie (28).

6. Transmission selon la revendication 4, **carac-**

**térisée** en ce que le premier embrayage (29) est fermé au moyen de la force d'un ressort et est ouvert au moyen d'une force auxiliaire, et en ce qu'un embrayage de séparation est disposé dans la liaison entre la couronne (45) de la boîte de vitesses (43) et le pignon planétaire (49) du train d'inversion (50).

EP 0 408 616 B1